# EUROPEAN PATENT APPLICATION

(11) **EP 2 228 762 A2**
(43) Date of publication of application: **15.09.2010**
(21) Application number: 10156252.8
(22) Date of filing: 11.03.2010
(51) Int. Cl.: G06Q 20/00, G07F 7/10

(54) **Method for coding and decoding codes**

(30) Priority: 12.03.2009 ES 200900684
(71) Applicant: Tabla C-Code-D, S.L., 07300 Inca (ES)
(72) Inventor: Alzamora Lliteras, Bartolome, 07430 Llubi (ES)
(74) Representative: Ponti Sales, Adelaida

(57) **Abstract**

The method for coding and decoding codes comprises the step of providing a first code according to coordinates; and it is **characterized in that** it comprises the additional step of providing a second code according to a key.

Said first code comprises preferably at least a first element and a second element.

With the method of the present invention the security is increased, because the user must know the key, which must be easy to memorize, to code or decode the second code.

## Description

The present invention refers to a method for coding and decoding codes, which permits an enhanced security.

### BACKGROUND OF THE INVENTION

In Internet bank is usual to use identification cards to do or strengthen some bank operations or event to consult data.

These identification cards comprise a number of codes. When the user wants to access to his/her bank account or to do some operations, such as e.g. a transfer to another account, the system asks the user for one of these codes. To this end, the user identifies the requested code by coordinates.

This decoding system presents the advantage that is easy, but its security is not suitable.

The lack of security is produced because when the banks provides to their clients this identification card, it is no longer possible to determine with reliability if the person who uses it is really the authorized user or if the card is used in a fraudulent way.

On the other hand, it is known the table for coding and decoding codes described in the Spanish utility model U200402449, whose holder is also the inventor of the present invention.

In this table, the coding and decoding is done by a row and a column of movable characters.

This table is devised for the user to store all his/her codes, secret numbers, passwords, etc., guaranteeing their security.

### SUMMARY OF THE INVENTION

With the method of the invention said drawbacks can be solved, presenting other advantages that will be described.

The method for coding and decoding codes of the present invention comprises the step of:
- providing a first code according to coordinates;
   and it is **characterized in that** it comprises the additional step of:
- providing a second code according to a key.

Thanks to this feature, the security is enhanced, because the user must know the key, which must be easy to remember, to code or decode the second code. Therefore e.g. the bank has the security that only the user has the key to access to his/her bank data.

According to a preferred embodiment, said first code comprises at least a first element and a second element.

Preferably, said first element of the first code is a letter, a number or a color, and second element of the first code comprises a number of two figures, or a letter and a number of one figure.

Advantageously, said key comprises a letter and a number with two figures, so that it can be remembered easily with no necessity of being written.

According to a preferred embodiment, said second code comprises at least a combination of one number and one letter for each element of said first code.

### BRIEF DESCRIPTION OF THE DRAWINGS

For a better understanding of what has been described some drawings are attached in which, diagrammatically and only as a non-limitative example, a practical case of embodiment is shown.
Fig. 1 shows a first table used in the method of the present invention; and
Fig. 2 shows a second table used in the method of the present invention.

### DESCRIPTION OF A PREFERRED EMBODIMENT

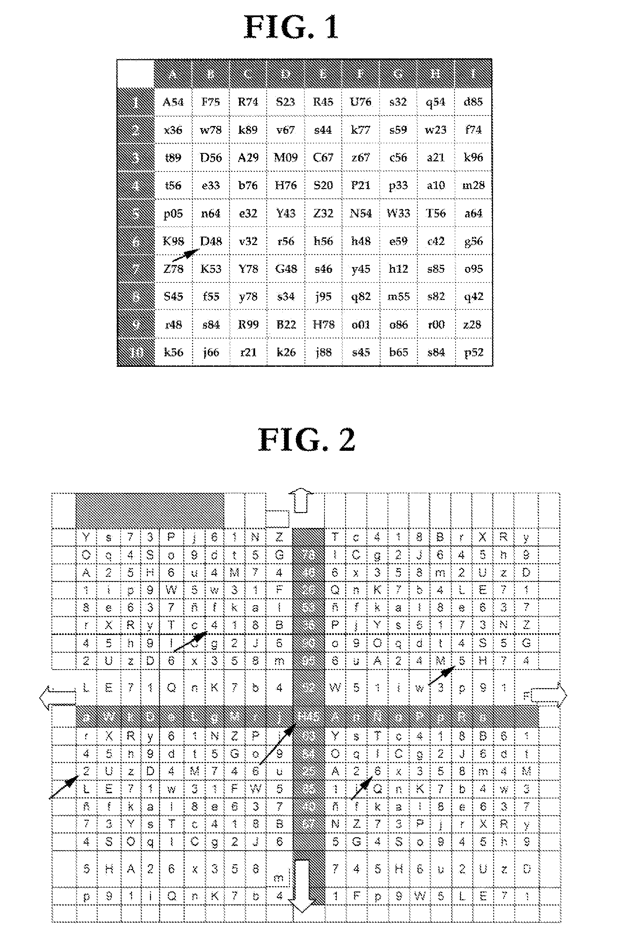

To use the method of the present invention, firstly a table as shown in Fig. 1 is provided. This table can be printed in a physical table or it can be part of a computer program installed in any suitable support, such as e.g. a computer or a cellular phone.

Even though the table can be of any suitable dimensions, in the embodiment shown the table includes a number of rows numbered 1 to 10 and a number of columns identified with letter A to I.

This table permits to code or decode a first code from the coordinates identified by a number and a letter.

E.g. according to a preferred embodiment, when a user connects to Internet to consult data from his/her bank account, the bank will request said first code.

E.g. if the bank requests the code corresponding to coordinates B6, the user must type the code D48.

As shown in said table, said first code comprises a first element and a second element, even though it could comprise any suitable number of elements.

In the embodiment shown, said first element is a letter, capital or lower case letter or a color, even though it could also be a number (with one or more figures).

On the other hand, said second element is preferably a number with two figures, even though it could be a number with more or less figures, or any other suitable symbol.

To code or decode said first code it is necessary a second table, shown in Fig. 2. As in the previous case, this second table can be a physical card or can be a part of a computer program.

In the case that the table is a card, this card will have the features of the card described in the Spanish utility model U200402449, which is included here as reference.

To use the second table, the user must use a key, previously memorized. To this end, the key will be simple, and it will be formed preferably by a capital or lower case letter and by a number with two figures, e.g. H45. Of course, it must be must be pointed out that the key will be any suitable key that can be memorized easily.

Said table is formed by a number of codes placed in rows and columns. The central row and column are empty to permit the movement of the movable row and column.

As shown in Fig. 2, moving the movable row and column until the values H45 are crossed, in this example the code 4526 is coded in g36 R95 a a25 N25, which will be the code to provide to the bank, in this case.

Therefore, the security is optimized, because to access to the bank data it is necessary to have two coding or decoding tables and one key, which can be memorized easily, because according to a preferred embodiment it comprises only a letter and a number with two figures.

It must be pointed out that that in the method of the present invention it is possible to use more tables and said two tables shown in the drawings, which can be identified by e.g. letters or colors. Therefore, the bank could provide information about with table must be used.

Even though reference is made to a specific embodiment of the invention, it is apparent for a person skilled in the art that the describe method is susceptible of numerous variations and modifications, and that all the details can be substituted by other technically equivalent ones, without departing from the scope of protection defined by the attached claims.

## Claims

1. Method for coding and decoding codes, comprising the step of:
- providing a first code according to coordinates;
**characterized in that** it comprises the additional step of:
- providing a second code according to a key.

2. Method according to claim 1, wherein said first code comprises at least a first element and a second element.

3. Method according to claim 2, wherein said first element of the first code is a letter or a number.

4. Method according to claim 2, wherein said second element of the first code comprises a number with two figures, or a letter and a number with one figure.

5. Method according to claim 1, wherein said key comprises a letter and a number with two figures.

6. Method according to claim 1 or 2, wherein said second code comprises at least a combination of one number and one letter for each element of said first code.
